# EUROPÄISCHE PATENTSCHRIFT

(11) **EP 0 823 690 B1**
(45) Veröffentlichungstag und Bekanntmachung des Hinweises auf die Patenterteilung: **14.07.2004**
(21) Anmeldenummer: 96111951.8
(22) Anmeldetag: 24.07.1996
(51) Int. Cl.: G06K 7/06, G06K 19/10

(54) **Speichermodul**
Memory cartridge
Module avec mémoire

(43) Veröffentlichungstag der Anmeldung: 11.02.1998
(73) Patentinhaber: SIEMENS AKTIENGESELLSCHAFT, 80333 München (DE)
(72) Erfinder: Mändl, Wolfgang, Dipl.-Ing., 92245 Kümmersbruck (DE); Gruber, Stefan, Dipl.-Ing., 92245 Kümmersbruck (DE); Domagoj, Ilic, Dipl.-Ing., 91056 Erlangen (DE); Kammler, Heiko, Dipl.-Ing., 92284 Trasslberg (DE); Kosch, Manfred, Dipl.-Ing., 92421 Schwandorf (DE)

(56) Entgegenhaltungen:
- EP-A- 0 649 080
- US-A- 3 859 634
- US-A- 4 865 321
- US-A- 5 161 169
- US-A- 5 276 831

## Beschreibung

Die vorliegende Erfindung betrifft ein System aus einem elektrischen und/oder elektronischen Gerät und einem Speichermodul für das Gerät, wobei im Speichermodul ein eigentliches Speicherelement sowie damit verbundene Kontaktelemente zum Kontaktieren des Gerätes vorgesehen sind sowie ein Speichermodul zur Verwendung in einem solchen System.

Speichermodule, die mit einem elektrischen und/oder elektronischen Gerät kontaktiert werden, sind im Stand der Technik allgemein bekannt. Im Stand der Technik sind vor allem Speichermodule bekannt, die mit dem elektrischen Gerät lösbar verbunden sind, so daß sie im Wartungs- oder Fehlerfall leicht von dem elektrischen Gerät getrennt werden können. Viele dieser Speichermodule sind auf einer Speichermodul-Leiterplatte aufgebracht, wobei diese letztlich nur eine Erweiterung oder Verlängerung der Leiterplatte des elektrischen Gerätes darstellt, mit der sie - um die leichte Austauschbarkeit zu gewährleisten - über geeignete Kontaktelemente lösbar verbunden ist. Da, wie vorstehend beschrieben, die bekannten Speichermodule letztlich als Erweiterungen der Leiterplatten elektrischer und/oder elektronischer Geräte angesehen werden können, werden solche Speichermodule folglich auf konventionelle Weise direkt angesteuert. Ein Authentizitätstest der Speichermodule ist auf diese Weise nicht möglich.

US 3 859 634 beschreibt ein elektronisches Schloßsystem, bei welchem ein codiertes Datenwort in einem Schlüssel gespeichert wird und beim Einführen des Schlüssels in ein Schloß mit einem Mastercode verglichen wird. Eine vorbestimmte Übereinstimmung zwischen dem Schlüsselcode und dem Mastercode verursacht die Bereitstellung eines Ausstellungssignals zur Betätigung des Schlosses oder anderer Vorrichtungen. Stimmen der Schlüsselcode und der Mastercode nicht überein, so wird kein entsprechendes Ausgangssignal generiert, sondern bedarfsweise ein Alarmsignal. Sowohl der Schlüssel als auch das Schloß enthalten digitale Schaltungen, um die Änderung des gespeicherten Codes zu vereinfachen und damit die Sicherheit des Systems zu verbessern.

Aus der US 4 865 321, gegen die die Ansprüche abgegrenzt sind, ist ein Steckmodul für eine Spielekonsole bekannt, welches eine Leiterplatte enthält, mit einem ROM (= Read Only Memory), einem Halbleiterspeicher zur Speicherung eines Programms zur Authentizitätsbestimmung des Steckmoduls und einem Mikrocomputer zur Ausführung des Programms. Ein zweiter Mikrocomputer in der Spielkonsole bestimmt die Authentizität des eingesteckten Steckmoduls.

Aus der EP 0 649 080 A1 ist bekannt, sicherheitsrelevante Informationen, wie beispielsweise kryptografische Schlüssel, im Sicherheitsmodul eines Terminals zu speichern. Das Terminal ist dabei mit einer zentralen Datenverarbeitungsanlage gekoppelt. Vor einem Datenaustausch zwischen dem Terminal und der Datenverarbeitungsanlage erfolgt eine Authentifikation. Bei dieser Authentifikation teilt das Sicherheitsmodul der Datenverarbeitungsanlage einen Zeitabstand in verschlüsselter Weise mit, nach dessen Ablauf eine nochmalige Authentifikation von der Datenverarbeitungsanlage anzustoßen ist. Wird diese nochmalige Authentifikation nicht rechtzeitig angestoßen, werden die im Sicherheitsmodul enthaltenen sicherheitsrelevanten Informationen gelöscht.

Aufgabe der Erfindung ist es daher, ein System aus einem elektrischen und/oder elektronischen Gerät und einem Speichermodul für das Gerät anzugeben, bei dem im Speichermodul ein eigentliches Speicherelement sowie damit verbundene Kontaktelemente zum Kontaktieren des Gerätes vorgesehen sind, dessen Speicherinhalt nur dann modifizierbar ist, wenn die vollständige Kompatibilität zwischen Speichermodul und elektrischem und/oder elektronischem Gerät sichergestellt ist.

Diese Aufgabe wird durch ein System mit den Merkmalen des Anspruchs 1 gelöst. Dabei erfolgt eine serielle Kommunikation zwischen dem Speichermodul und dem Gerät über die Kontaktelemente und dabei führt das Gerät beim Start der Kommunikation zunächst einen Authentizitätstest bezüglich des Speichermodules durch. Mit dem Authentizitätstest wird sichergestellt, daß Speichermodul und Gerät kompatibel sind, so daß die Interaktion beider Komponenten fehlerfrei und bestimmungsgemäß erfolgen kann. Mit einem derartigen Speichermodul kann vorteilhafterweise jederzeit sichergestellt werden, daß das elektrische und/oder elektronische Gerät seinen Betrieb nur mit einem authentisierten Speichermodul aufnimmt.

Durch die zunehmende Standardisierung von Bauteilen und Komponenten entsteht zunehmend die Gefahr, daß z. B. ein Speichermodul aus einem elektrischen Gerät entnommen wird, dessen Daten mit einem geeigneten weiteren elektrischen Gerät ausgelesen und zwischengespeichert werden, so daß die ausgelesenen Daten nach Wiederanbringen des Speichermoduls schließlich in grundsätzlich beliebiger Anzahl in weitere Speichermodule eingebracht werden können, so daß eine Vielzahl von elektrischen Geräten mit den so entnommenen Daten betreibbar sind. Häufig ist der Betreiber des elektrischen Gerätes jedoch sehr daran interessiert, daß die Daten, die in dem Speichermodul eines elektrischen Gerätes gespeichert sind, z. B. produktspezifische Daten, die über einen langjährigen Produktionsprozeß optimiert wurden, nicht ohne weiteres auch in andere elektrische Geräte übernommen werden können. Ebenso besteht großes Interesse, wirkungsvoll vermeiden zu können, daß z. B. die Daten eines Speichermodules, das aus einem elektrischen und/oder elektronischen Gerät entnommen wurde, mit einem geeigneten anderen elektrischen und/oder elektronischen Gerät ausgelesen, modifiziert und danach in das Speichermodul wieder eingeschrieben werden. Für den Fall, daß das Speichermodul z. B. produktionsbezogene Daten enthält, gehen auf diese Weise dem Anwender des elektrischen und/oder elektronischen Gerätes möglicherweise Daten verloren, die das Ergebnis einer langwierigen Optimierung eines Produktionsprozesses sind. Durch einen Authentizitätstest läßt sich wirkungsvoll vermeiden, daß aus Speichermodulen Daten unberechtigt entnommen und vervielfältigt werden oder aber das unberechtigt in Speichermodulen Daten gelöscht oder modifiziert werden.

In einer vorteilhaften Ausgestaltung der Erfindung empfängt das Speichermodul während des Authentizitätstests eine Authentizitätstests-Eingangssignalfolge und gibt in Abhängigkeit von der empfangenen Signalfolge zur Authentisierung eine Authentizitätstests-Ausgangssignalfolge aus. Durch die Verwendung der beschriebenen Eingangs- bzw. Ausgangssignalfolgen läßt sich der Authentizitätstest besonders schnell und sicher durchführen. Die unterschiedlichen Varianten des Authentizitätstests sind stets so beschrieben, daß das Speichermodul während des Authentizitätstests eine Authentizitätstests-Eingangssignalfolge empfängt und daraufhin in Abhängigkeit von der empfangenen Signalfolge zur Authentisierung eine Authentizitätstests-Ausgangssignalfolge ausgibt. Der Authentizitätstest ist für sämtliche angegebenen Varianten auch durchführbar, wenn das elektrische Gerät während des Authentizitätstests eine Authentizitätstests-Eingangssignalfolge empfängt und daraufhin in Abhängigkeit von der empfangenen Signalfolge zur Authentisierung eine Authentizitätstests-Ausgangssignalfolge an das Speichermodul ausgibt.

In einer weiteren vorteilhaften Ausgestaltung der Erfindung gibt das Speichermodul während des Authentizitätstests nach dem Empfang der Authentizitätstest-Eingangssignalfolge eine vorbestimmte, z. B. mit den Leistungsdaten oder sonstigen relevanten Parametern des Speichermoduls, z. B. der Kapazität des Speichermoduls korrespondierende Authentizitätstest-Ausgangssignalfolge aus. Neben der Authentisierung des Speichermoduls ist damit auch eine Identifikation und eine eventuell davon abhängige geeignete Interaktion mit dem Speichermodul möglich.

Wenn das Speichermodul beim Authentizitätstest nach dem Empfang der Authentizitätstest-Eingangssignalfolge als Authentizitätstest-Ausgangssignalfolge die empfangene Authentizitätstest-Eingangssignalfolge ausgibt, ergibt sich in vorteilhafter Weise eine nochmalige Vereinfachung des Authentizitätstests, mit dem sich jedoch die gewünschte Authentisierung des Speichermoduls in vollem Umfang gewährleisten läßt.

In einer weiteren vorteilhaften Ausgestaltung weist das Speichermodul einen mechanischen Verpolschutz auf. Durch diesen Verpolschutz ist sichergestellt, daß das Speichermodul ausschließlich so in das elektrische Gerät einführbar ist, daß die Kontaktelemente mit entsprechenden Kontaktaufnahmen des elektrischen Gerätes in gewünschter Weise kontaktiert werden.

Wenn die Außenkontur des Speichermoduls durch ein Gehäuse vorgegeben ist und das Gehäuse als Formschlußelement ausgebildet ist, so daß das Gehäuse des Speichermoduls mit einer entsprechenden Formschlußaufnahme, dem Speichermodulschacht am elektrischen und/oder elektronischen Gerät zusammenwirkt, so daß das Speichermodul formschlüssig in den Speichermodulschacht einsetzbar ist, so ist gleichfalls wirkungsvoll verhindert, daß das Speichermodul in einer Weise in das elektrische Gerät eingeführt wird, die nicht zu der gewünschten Kontaktierung zwischen Kontaktelementen und Kontaktaufnahmen führt.

Weitere Vorteile und erfinderische Einzelheiten ergeben sich aus der nachfolgenden Beschreibung eines Ausführungsbeispiels anhand der Zeichnungen in Verbindung mit den Unteransprüchen. Im einzelnen zeigen:
- FIG. 1: elektrisches Gerät und Speichermodul im Teilanschnitt,
- FIG. 2: Speichermodul von der Unterseite,
- FIG. 3: elektrisches Gerät mit eingesetztem Speichermodul und
- FIG. 4: Verpolschutz an elektrischem Gerät und Speichermodul.

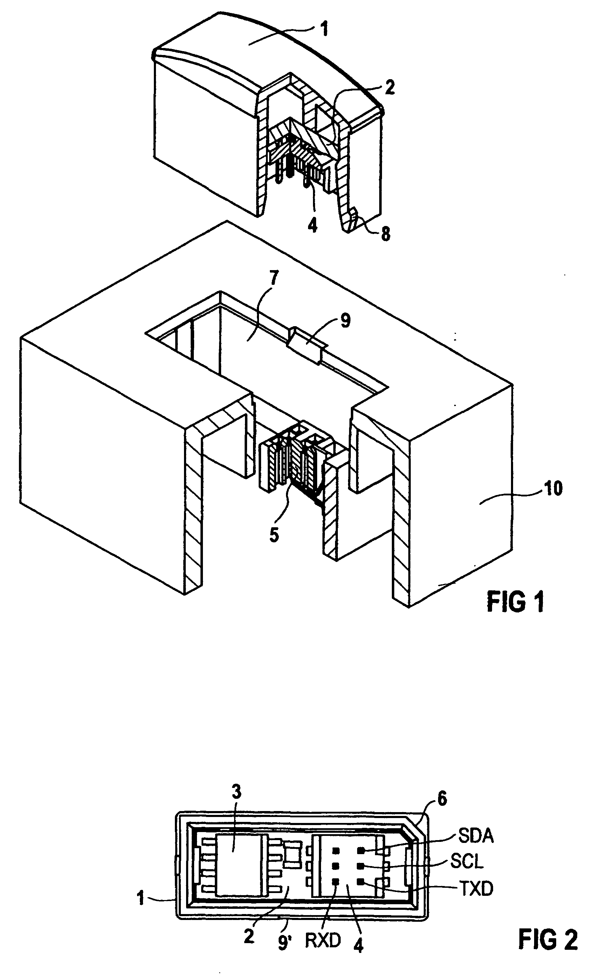

FIG. 1 zeigt das Speichermodul 1 und das elektrische und/oder elektronische Gerät 10, in das das Speichermodul 1 eingesetzt wird. Das Speichermodul 1 ist von einem Gehäuse zumindest teilweise umschlossen. Das Speichermodul 1 weist im Ausführungsbeispiel eine Speichermodul-Leiterplatte 2 auf. Selbstverständlich sind auch Ausführungsformen ohne diese Leiterplatte 2 denkbar. Auf der Speichermodul-Leiterplatte 2 sind ein in FIG. 1 nicht sichtbares Speicherelement 3 (siehe Fig. 2) sowie die Kontaktelemente 4 angeordnet. Im Ausführungsbeispiel gemäß FIG. 1 handelt es sich bei den Kontaktelementen 4 um eine doppelreihige, sechspolige Stiftleiste 4. Das Gehäuse des Speichermodules 1 weist an zumindest einer Seitenfläche ein Rastelement 8, im Ausführungsbeispiel gemäß FIG. 1 eine Rastnase 8, auf. Beim Einführen des Speichermodules 1 in den Speichermodulschacht 7 des elektrischen und/oder elektronischen Gerätes 10 verrastet die Rastnase 8 in eine entsprechende, in FIG. 1 nicht dargestellte Ausnehmung, so daß das Speichermodul 1 lösbar mit dem elektrischen und/oder elektronischen Gerät verbindbar ist. Beim Einführen des Speichermoduls 1 in das elektrische und/oder elektronische Gerät 10 kontaktieren die Kontaktelemente 4 mit entsprechenden Kontaktaufnahmen 5 des elektrischen Gerätes, so daß eine elektrisch leitende Verbindung zwischen elektrischem Gerät 10 und Speichermodul 1 hergestellt ist. Beim Ausführungsbeispiel gemäß FIG. 1 handelt es sich bei den Kontaktaufnahmen 5 um eine sechspolige Buchsenleiste 5.

FIG. 2 zeigt das Speichermodul von der Unterseite. In FIG 2 erkennt man das Speichermodul 1 mit der darin angeordneten Speichermodul-Leiterplatte 2. Auf der Leiterplatte 2 sind zumindest das Speicherelement 3 sowie die Kontaktelemente 4 aufgebracht. Mit Hilfe der Kontaktelemente 4 und der in FIG. 1 dargestellten Kontaktaufnahme 5 ist die elektrisch leitende Verbindung zwischen Speichermodul 1 und elektrischem Gerät realisiert. Bei dem Speichermodul 1 gemäß dem Ausführungsbeispiel ist die Kommunikation zwischen Speichermodul 1 und elektrischem Gerät 10 als serielle Kommunikation realisiert. Jedem der Kontaktelemente 4 ist somit eine für die serielle Kommunikation benötigte Signalleitung zugeordnet. An dieser Stelle sei insbesondere auf die in FIG. 2 mit RXD bzw. TXD bezeichneten Kontaktelemente 4 hingewiesen, zwischen denen beim Ausführungsbeispiel eine nicht dargestellte elektrisch leitende Verbindung besteht. Bei den beiden Signalleitungen RXD und TXD handelt es sich um Signalleitungen, die benötigt werden, wenn als elektrisches und/oder elektronisches Gerät 10 z. B. ein PC 10, zum Einsatz kommt. SDA und SDL sind die beiden Signalleitungen des I²C-Bus kompatiblen seriellen EEPROMs 3. Beim Einschreiben von Daten in das Speichermodul 1 mit einem PC 10 kommt der Brücke der Kontaktelemente RXD, TXD eine besondere Bedeutung zu. Erst durch das Einsetzen des Moduls in eine dafür vorgesehene Einschreib- und/oder Programmiereinrichtung wird die Stromversorgung der Einschreibund/oder Programmiereinrichtung aktiv. Die Brücke stellt somit den Ein-/Ausschalter für diese Schaltung dar und hat das Ziel, den Stromverbrauch zu reduzieren.

Gemäß FIG. 2 weist das Speichermodul 1 einen mechanischen Verpolschutz 6 auf. Mit dem mechanischen Verpolschutz 6 ist sichergestellt, daß das Speichermodul 1 nur so in den Speichermodulschacht 7 des elektrischen Gerätes 10 einführbar ist, daß die Kontaktelemente 4 und die Kontaktaufnahme 5 bestimmungsgemäß miteinander kontaktiert werden.

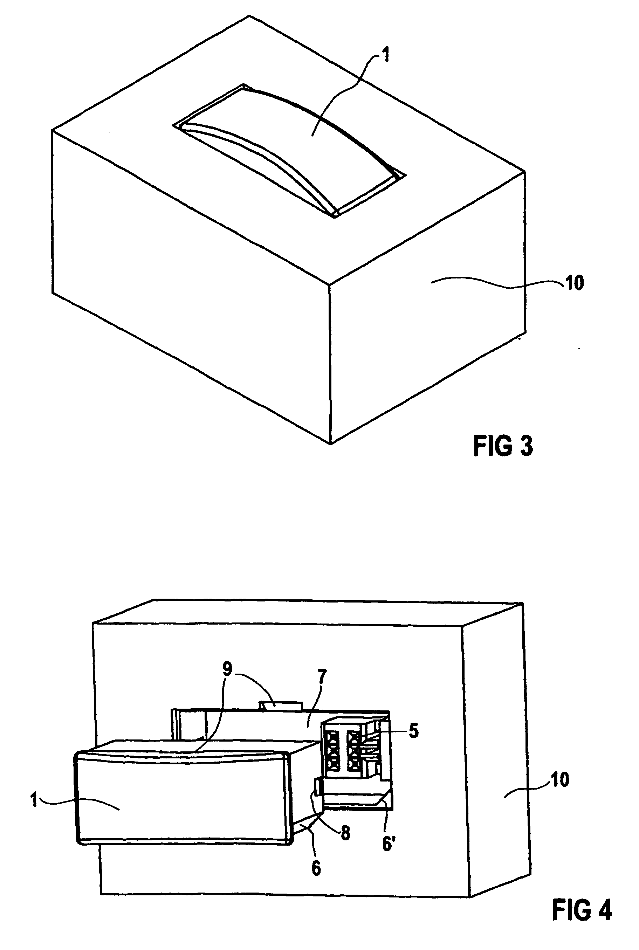

FIG. 3 zeigt das in das elektrische Gerät 10 eingesetzte Speichermodul 1. Im Ausführungsbeispiel ist das Speichermodul 1 so geformt, daß es im Speichermodulschacht 7 soweit versenkbar ist, daß es nur mit Hilfe eines Werkzeugs, z. B. eines Schraubendrehers, auswechselbar ist. Zum Lösen des Speichermoduls 1 vom elektrischen Gerät 10 befindet sich sowohl am Speichermodul 1 als auch am elektrischen Gerät 10 eine Führungskontur 9 bzw. 9'. Von dieser Kontur 9, 9', im Ausführungsbeispiel eine Einkerbung 9, 9', wird das Werkzeug so geführt, daß das Lösen des Speichermoduls 1 erleichtert wird. Ein Wechseln des Speichermoduls 1 von Hand ist durch die Abschrägungen und Rundungen der aus dem Speichermodulschacht 7 herausragenden Flächen des Speichermoduls 1 nicht möglich. Dies soll verhindern, daß die potentialgebundene Schnittstelle von Laien bedient oder berührt wird. Die erfindungsgemäße Konstruktion des Speichermoduls trägt damit auch dem Sicherheitsaspekt in ausreichendem Maße Rechnung.

FIG. 4 zeigt abschließend nochmals das elektrische Gerät 10 mit dem Speichermodulschacht 7. In diesen Speichermodulschacht 7 ist das Speichermodul 1 zum Betrieb mit dem elektrischen Gerät 10 einführbar. Das Einführen ist nur möglich, wenn das Speichermodul 1 seitenrichtig in den Speichermodulschacht 7 eingeführt wird. Um dies zu gewährleisten, ist bei dem Speichermodul 1 als Verpolschutz 6 eine der vier Ecken abgeschrägt. Diese Abschrägung 6 korrespondiert mit einer entsprechenden Abschrägung 6' des Speichermodulschachtes 7 am elektrischen und/oder elektronischen Gerät 10. Ein Einführen des Speichermoduls 1 in den Speichermodulschacht 7 ist nur möglich, wenn sich die Abschrägungen 6 bzw. 6' gegenüberliegen. Darüber hinaus weist das Speichermodul 1 an zumindest einer der Seitenflächen ein Rastelement 8 auf. Mit diesem Rastelement 8 verrastet das Speichermodul 1 im Speichermodulschacht 7 des elektrischen Gerätes 10.

Wenn das Speichermodul 1 in das elektrische Gerät 10 eingesetzt ist, werden die Kontaktelemente 4 und die Kontaktaufnahme 5 elektrisch leitend miteinander kontaktiert. Zum Einschreiben, Modifizieren oder Löschen von Daten im Speicherelement 3 des Speichermoduls 1 werden dann Signal- und/oder Datenfolgen zwischen Speichermodul 1 und elektrischem Gerät 10 übertragen. Beim elektrischen Gerät 10 gemäß dem Ausführungsbeispiel erfolgt diese Datenübertragung über einen seriellen I²C-Bus. Um gemäß der Aufgabe der Erfindung jederzeit die Authentizität des Speichermoduls 1 sicherzustellen, wird zumindest bei Beginn der Kommunikation zwischen elektrischem Gerät 10 und Speichermodul 1 ein Authentizitätstest durchgeführt. Der Authentizitätstest besteht zumindest aus dem Austausch zweier Signalfolgen, wobei das Speichermodul 1 eine Authentizitätstest-Eingangssignalfolge von dem elektrischen Gerät 10 empfängt und in Abhängigkeit von der empfangenen Signalfolge zur Authentisierung eine Authentizitätstest-Ausgangssignalfolge ausgibt. Bei der Kombination von elektrischem Gerät 10 und Speichermodul 1 gemäß dem Ausführungsbeispiel wird beim Start der Kommunikation als Authentizitätstest-Eingangssignalfolge insbesondere die Signalfolge 1010" verwendet. Aufgrund der Brückung der Kontaktelemente RXD und TXD innerhalb des Speichermoduls 1 wird diese vom Speichermodul 1 empfangene Signalfolge unmittelbar als Authentizitätstest-Ausgangssignalfolge über RXD ausgegeben und von dem elektrischen Gerät 10 eingelesen. Auf diese Weise wird auch die Brückung der Kontaktelemente RXD und TXD überprüft. Anschließend wird in einem weiteren Authentisierungsschritt über diejenigen Kontaktelemente 4, die mit den Signalleitungen SCL, SDA belegt sind, mit Hilfe des I²C-Protokolls die Kennung des EEPROMs 3 ausgelesen. Das Speichermodul 1 gemäß dem Ausführungsbeispiel weist als Speicherelement 3 ein EEPROM 3 auf, das eine 8-bit-Kennung liefert. In diesem Falle besteht zumindest ein Teil der Authentisierungs-Ausgangssignalfolge aus diesen 8 bit der Kennung des EEPROMs 3. Im Falle von anderen Speicherelementen 3 kann sich durchaus eine abweichende Länge der Authentisierungs-Ausgangssignalfolge ergeben. Bei der Kombination zwischen Speichermodul 1 und elektrischem Gerät 10 gemäß dem Ausführungsbeispiel besteht die Authentisierungs-Ausgangssignalfolge damit aus der Signalfolge "1010" sowie der 8-bit-Kennung des EEPROMs 3. Wird die Authentisierungs-Ausgangssignalfolge als korrekt akzeptiert, so erfolgt je nach Funktion bzw. Einsatzgebiet des elektrischen Gerätes 10 ein Auslesen bzw. Einschreiben oder auch ein Modifizieren bzw. Löschen von Daten im Speicherelement 3 des Speichermoduls 1.

Wird die Authentisierungs-Ausgangssignalfolge nicht akzeptiert, so sind keine derartigen Zugriffe auf das Speichermodul 1 möglich.

In der vorstehend beschriebenen Ausgestaltung des erfindungsgemäßen Speichermoduls 1 empfängt das Speichermodul 1 zunächst vom elektrischen Gerät 10 eine Authentizitätstest-Eingangssignalfolge. Aufgrund der Brückung der Signalleitung RXD, TXD der Kontaktelemente 4 wird diese Signalfolge unmittelbar an das elektrische Gerät 10 zurückgesendet. Die vom Speichermodul 1 empfangene Signalfolge ist demnach identisch mit der gesendeten Signalfolge und bildet somit den ersten Teil der Authentizitätstest-Ausgangssignalfolge. Daraufhin wird über die Signalleitung SCL und SDA mit Hilfe des I²C-Protokolls die Kennung des EEPROMs 3 ausgelesen. Die vom Speichermodul 1 gelieferte Kennung bildet somit den abschließenden Teil der Authentizitätstest-Ausgangssignalfolge. In einer weiteren vorteilhaften Ausgestaltung des Speichermoduls 1 ist es auch möglich, die beiden Teile der Authentizitätstest-Ausgangssignalfolge zu nur einem Teil zusammenzufassen und trotzdem Leistungsdaten oder sonstige relevante Parameter des Speichermoduls zu empfangen. Bei einer derartigen Ausgestaltung empfängt das Speichermodul 1 wie bereits beschrieben vom elektrischen Gerät 10 eine Authentizitätstest-Eingangssignalfolge. Im Speichermodul 1 ist eine speichermodulspezifische Kennung abgespeichert. Empfangene Signalfolge und speichermodulspezifische Kennung werden über eine logische Operation, vorzugsweise über eine reversible logische Operation, z. B. die Exklusiv-Oder-Operation miteinander verknüpft. Das Ergebnis dieser Verknüpfung wird als Authentizitätstest-Ausgangssignalfolge an das elektrische Gerät 10 gesendet. Im elektrischen Gerät 10 sind eine Reihe von Kennungen möglicher Speicherelemente 3 des Speichermoduls 1 abgespeichert. Im elektrischen Gerät 10 werden daraufhin nacheinander diese abgespeicherten Kennungen mit der vom elektrischen Gerät 10 ursprünglich ausgesandten Signalfolge mit der gleichen logischen Operation, z. B. der Exklusiv-Oder-Operation verknüpft. Aufgrund der Reversibilität dieser Exklusiv-Oder-Operation (XOR) ergibt sich beim Testen der einzelnen abgespeicherten Kennungen zu irgendeinem Zeitpunkt als Ergebnis der Verknüpfung wieder die ursprünglich an das Speichermodul 1 gesendete Signalfolge. Damit sind jetzt sowohl die Authentizität des Speichermoduls sichergestellt als auch Art und Typ des im Speichermodul 1 verwendeten Speicherelementes 3 und damit Leistungsdaten oder sonstige relevante Parameter des Speichermoduls 1 bekannt.

## Patentansprüche

1. System aus einem elektrischen und/oder elektronischen Gerät (10) und einem Speichermodul (1) für das Gerät (10), wobei im Speichermodul (1) ein eigentliches Speicherelement (3) sowie damit verbundene Kontaktelemente (4) zum Kontaktieren des Gerätes vorgesehen sind, wobei die Kontaktelemente (4) für eine serielle Kommunikation zwischem dem Speichermodul (1) und dem Gerät (10) vorgesehen sind und im Gerät (10) sowie im Speichermodul (1) erste Mittel zur Durchführung eines Authentizitätstests bezüglich des Speichermoduls (1) beim Start der Kommunikation mit dem Gerät (10) vorgesehen sind, wobei im Gerät (10) zweite Mittel vorhanden sind, die bei Erfolg des Authentizitätstests Lesezugriffe auf das Speicherelement (3) des Speichermodules (1) zulassen und beim Scheitern des Authentizitätstests Lesezugriffe auf das Speicherelement (3) des Speichermodules (1) verhindern,
**dadurch gekennzeichnet,**
**dass** die zweiten Mittel bei Erfolg des Authentizitätstests Schreibzugriffe auf das Speicherelement (3) des Speichermodules (1) zulassen und beim Scheitern des Authentizitätstests Schreibzugriffe auf das Speicherelement (3) des Speichermodules (1) verhindern.

2. System nach Anspruch 1,
**dadurch gekennzeichnet,**
**dass** das Speichermodul (1) während des Authentizitätstests eine Authentizitätstest-Eingangssignalfolge empfängt und in Abhängigkeit von der empfangenen Signalfolge zur Authentisierung eine Authentizitätstest-Ausgangssignalfolge ausgibt.

3. System nach Anspruch 2,
**dadurch gekennzeichnet,**
**dass** das Speichermodul (1) während des Authentizitätstests nach dem Empfang der Authentizitätstest-Eingangssignalfolge eine vorbestimmte, mit Leistungsdaten oder sonstigen relevanten Parametern des Speichermoduls korrespondierende Authentizitätstest-Ausgangssignalfolge ausgibt.

4. System nach Anspruch 2 oder 3,
**dadurch gekennzeichnet,**
**dass** das Speichermodul beim Authentizitätstest nach dem Empfang der Authentizitätstest-Eingangssignalfolge als Authentizitätstest-Ausgangssignalfolge eine Signalfolge, die zumindest die empfangene Authentizitäts-Eingangssignalfolge enthält, ausgibt.

5. System nach Anspruch 2 oder 4,
**dadurch gekennzeichnet,**
**dass** das Speichermodul beim Authentizitätstest nach dem Empfang der Authentizitätstest-Eingangssignalfolge als Authentizitätstest-Ausgangssignalfolge die empfangene Authentizitäts-Eingangssignalfolge ausgibt.

6. System nach Anspruch 2 oder 4,
**dadurch gekennzeichnet,**
**dass** das Speichermodul (1) als Authentizitätstest-Eingangssignalfolge eine Signalfolge, insbesondere "1010", empfängt und eine zweiteilige Authentizitätstest-Ausgangssignalfolge ausgibt, wobei der erste Teil der Authentizitätstest-Ausgangssignalfolge identisch mit der empfangenen Authentizitätstest-Eingangssignalfolge ist und wobei sich der zweite Teil der Authentizitätstest-Ausgangssignalfolge aus der Kennung des Speicherelementes (3) des Speichermodules (1) ergibt.

7. System nach einem der Ansprüche 1 bis 6,
**dadurch gekennzeichnet,**
**dass** das Speichermodul (1) einen mechanischen Verpolschutz (6, 6') aufweist.

8. System nach Anspruch 7,
**dadurch gekennzeichnet,**
**dass** als Verpolschutz (6) eine der vier Ecken des Speichermodules (1) abgeschrägt ist, wobei diese Abschrägung (6) mit einer entsprechenden Abschrägung (6') des Speichermodulschachtes (7) am elektrischen und/oder elektronischen Gerät (10) korrespondiert.

9. System nach einem der Ansprüche 1 bis 7,
**dadurch gekennzeichnet,**
**dass** die Außenkontur des Speichermoduls (1) durch ein Gehäuse (1) vorgegeben ist und dass das Gehäuse (1) als Formschlusselement (1) ausgebildet ist, so dass das Gehäuse (1) mit einer entsprechenden Formschlussaufnahme (7), nämlich dem Speichermodulschacht (7), am elektrischen und/oder elektronischen Gerät (10) zusammenwirkt, so dass das Speichermodul (1) formschlüssig in den Speichermodulschacht (7) einsetzbar ist.

10. System nach einem der Ansprüche 7 bis 9,
**dadurch gekennzeichnet,**
**dass** das Speichermodul (1) lösbar mit dem elektrischen und/oder elektronischen Gerät (10) verbindbar ist und dass das Speichermodul (1) mittels eines Rastelementes (8) im Speichermodulschacht (7) des elektrischen und/oder elektronischen Gerätes (10) verrastet.

11. System nach einem der obigen Ansprüche,
**dadurch gekennzeichnet,**
**dass** die Kontaktelemente (4), über die eine serielle Kommunikation zwischen elektrischem und/oder elektronischem Gerät (10) und dem Speichermodul (1) erfolgt, elektrisch leitend so miteinander verbunden sind, dass einerseits beim Einschreiben von Daten in das Speicherelement (3) des Speichermoduls (1) durch das elektrische und/oder elektronische Gerät (10) die für das Einschreiben von Daten benötigte Stromversorgung mittels der elektrisch leitenden Verbindungen zwischen den Kontaktelementen (4) aktiviert wird und andererseits die elektrisch leitende Verbindung zwischen den Kontaktelementen (4) die elektrisch und/oder elektronisch überprüfbare Grundvoraussetzung für den Beginn des Authentizitätstests bildet.

## Claims

1. A system comprising an electrical and/or electronic device (10) and a memory module (1) for the device (10), wherein an actual memory element (3) and its associated contact elements (4) for making contact with the device are provided in the memory module, wherein the contact elements (4) are provided for a serial communication between the memory module (1) and the device (10) and first means for performing an authenticity test in relation to the memory module (1) are provided in the device (10) and in the memory module (1) at the start of the communication with the device (10), wherein second means are present in the device (10) which, if the authenticity test is successful, allow read accesses to the memory element (3) of the memory module (1) and, if the authenticity test fails, prevent read accesses to the memory element (3) of the memory module (1),
**characterized in that**
the second means permit write accesses to the memory element (3) of the memory module (1) if the authenticity test is successful and prevent write accesses to the memory element (3) of the memory module (1) if the authenticity test fails.

2. The system according to claim 1,
**characterized in that**
the memory module (1) receives an authenticity test input signal sequence during the authenticity test and, for authentication purposes, outputs an authenticity test output signal sequence as a function of the received signal sequence.

3. The system according to claim 2,
**characterized in that**
during the authenticity test, following the reception of the authenticity test input signal sequence, the memory module (1) outputs a predetermined authenticity test output signal sequence corresponding to performance data or other relevant parameters of the memory module.

4. The system according to claim 2 or 3,
**characterized in that**
during the authenticity test, following the reception of the authenticity test input signal sequence, the memory module outputs a signal sequence which contains at least the received authenticity input signal sequence as the authenticity test output signal sequence.

5. The system according to claim 2 or 4,
**characterized in that**
during the authenticity test, following the reception of the authenticity test input signal sequence, the memory module outputs the received authenticity input signal sequence as the authenticity test output signal sequence.

6. The system according to claim 2 or 4,
**characterized in that**
the memory module (1) receives a signal sequence, in particular "1010", as the authenticity test input signal sequence and outputs a two-part authenticity test output signal sequence, wherein the first part of the authenticity test output signal sequence is identical to the received authenticity test input signal sequence and wherein the second part of the authenticity test output signal sequence is produced from the identifier of the memory element (3) of the memory module (1).

7. The system according to one of the claims 1 to 6,
**characterized in that**
the memory module (1) has a mechanical polarity reversal protection (6, 6').

8. The system according to claim 7,
**characterized in that**
to provide a polarity reversal protection (6) one of the four corners of the memory module (1) is bevelled, whereby said bevel (6) corresponds to a matching bevel (6') of the memory module bay (7) on the electrical and/or electronic device (10).

9. The system according to one of claims 1 to 7,
**characterized in that**
the outer contour of the memory module (1) is defined by a housing (1) and the housing (1) is designed as a positive fit element (1) so that the housing (1) interacts with a corresponding positive fit receptacle (7), namely the memory module bay (7), on the electrical and/or electronic device (10) such that the memory module (1) can be inserted positively into the memory module bay (7).

10. The system according to claims 7 to 9,
**characterized in that**
the memory module (1) can be detachably connected to the electrical and/or electronic device (10) and the memory module (1) engages in the memory module bay (7) of the electrical and/or electronic device (10) by means of a locating element (8).

11. The system according to one of the above claims,
**characterized in that**
the contact elements (4), via which a serial communication takes place between electrical and/or electronic device (10) and the memory module (1), are connected in an electrically conducting manner in such a way that on the one hand, when data is written into the memory element (3) of the memory module (1) by the electrical and/or electronic device (10), the power supply required for the writing in of data is activated by means of the electrically conducting connection between the contact elements (4) and on the other hand the electrically conducting connection between the contact elements (4) forms the electrically and/or electronically verifiable basic precondition for the start of the authenticity test.

## Revendications

1. Système constitué d'un appareil électrique et/ou électronique (10) et d'un module de mémoire (1) pour l'appareil (10), un élément de mémoire proprement dit (3) ainsi que des éléments de contact (4) reliés à celui-ci pour la mise en contact de l'appareil étant prévus dans le module de mémoire (1), les éléments de contact (4) étant prévus pour une communication sérielle entre le module de mémoire (1) et l'appareil (10) et des premiers moyens pour la mise en oeuvre d'un test d'authenticité concernant le module de mémoire (1) lors du démarrage de la communication avec l'appareil (10) étant prévus dans l'appareil (10) ainsi que dans le module de mémoire (1), des deuxièmes moyens étant prévus dans l'appareil (10) pour autoriser des accès en lecture à l'élément de mémoire (3) du module de mémoire (1) lorsque le test d'authenticité a réussi et pour empêcher des accès en lecture à l'élément de mémoire (3) du module de mémoire (1) lorsque le test d'authenticité a échoué,
**caractérisé par le fait que** les deuxièmes moyens autorisent des accès en écriture à l'élément de mémoire (3) du module de mémoire (1) lorsque le test d'authenticité a réussi et empêchent des accès en écriture à l'élément de mémoire (3) du module de mémoire (1) lorsque le test d'authenticité a échoué.

2. Système selon la revendication 1,
**caractérisé par le fait que**, pendant le test d'authenticité, le module de mémoire (1) reçoit une séquence de signal d'entrée de test d'authenticité et délivre une séquence de signal de sortie de test d'authenticité pour l'authentification en fonction de la séquence de signal reçue.

3. Système selon la revendication 2,
**caractérisé par le fait que**, pendant le test d'authenticité, après la réception de la séquence de signal d'entrée de test d'authenticité, le module de mémoire (1) délivre une séquence de signal de sortie de test d'authenticité prédéterminée comportant des données caractéristiques ou d'autres paramètres déterminants du module de mémoire.

4. Système selon la revendication 2 ou 3,
**caractérisé par le fait que**, lors du test d'authenticité, après la réception de la séquence de signal d'entrée de test d'authenticité, le module de mémoire délivre comme séquence de signal de sortie de test d'authenticité une séquence de signal qui contient au moins la séquence de signal d'entrée de test d'authenticité reçue.

5. Système selon la revendication 2 ou 4,
**caractérisé par le fait que**, lors du test d'authenticité, après la réception de la séquence de signal d'entrée de test d'authenticité, le module de mémoire délivre comme séquence de signal de sortie de test d'authenticité la séquence de signal d'entrée de test d'authenticité reçue.

6. Système selon la revendication 2 ou 4,
**caractérisé par le fait que** le module de mémoire (1) reçoit comme séquence de signal d'entrée de test d'authenticité une séquence de signal, en particulier "1010", et délivre une séquence de signal de sortie de test d'authenticité en deux parties, la première partie de la séquence de signal de sortie de test d'authenticité étant identique à la séquence de signal d'entrée de test d'authenticité reçue et la deuxième partie de la séquence de signal de sortie de test d'authenticité se déduisant de l'identificateur de l'élément de mémoire (3) du module de mémoire (1).

7. Système selon l'une des revendications 1 à 6,
**caractérisé par le fait que** le module de mémoire (1) comporte une protection mécanique contre toute erreur de polarisation (6, 6').

8. Système selon la revendication 7,
**caractérisé par le fait que**, comme protection contre toute erreur de polarisation (6), l'un des quatre coins du module de mémoire (1) est chanfreiné, ce chanfrein (6) coïncidant avec un chanfrein (6') correspondant du logement de module de mémoire (7) sur l'appareil électrique et/ou électronique (10).

9. Système selon l'une des revendications 1 à 7,
**caractérisé par le fait que** le contour extérieur du module de mémoire (1) est défini par un boîtier (1) et que le boîtier (1) est conçu comme un élément à assemblage par concordance de formes (1) de telle sorte que le boîtier (1) coopère avec un logement à assemblage par concordance de formes correspondant (7) à savoir le logement de module de mémoire (7), sur l'appareil électrique et/ou électronique (10) de telle sorte que le module de mémoire (1) peut être placé par concordance de formes dans le logement de module de mémoire (7).

10. Système selon l'une des revendications 7 à 9,
**caractérisé par le fait que** le module de mémoire (1) peut être assemblé de manière amovible à l'appareil électrique et/ou électronique (10) et que le module de mémoire (1) s'enclenche dans le logement de module de mémoire (7) de l'appareil électrique et/ou électronique (10) au moyen d'un élément d'enclenchement (8).

11. Système selon l'une des revendications précédentes,
**caractérisé par le fait que** les éléments de contact (4), par l'intermédiaire desquels une communication sérielle s'effectue entre l'appareil électrique et/ou électronique (10) et le module de mémoire (1), sont reliés ensemble de manière à conduire l'électricité de telle sorte que d'une part lors de l'écriture de données dans l'élément de mémoire (3) du module de mémoire (1) par l'appareil électrique et/ou électronique (10) l'alimentation en courant nécessaire à l'écriture de données est activée au moyen des liaisons électriques entre les éléments de contact (4) et d'autre part la liaison électrique entre les éléments de contact (4) constitue la condition fondamentale, vérifiable par des moyens électriques et/ou électroniques, pour le début du test d'authenticité.
